Europäisches Patentamt

**European Patent Office**

**Office européen des brevets**

(11) Numéro de publication : **0 233 813**
**B1**

(12) **FASCICULE DE BREVET EUROPÉEN**

(45) Date de publication du fascicule du brevet :
07.06.89

(21) Numéro de dépôt : **87400176.1**

(22) Date de dépôt : **26.01.87**

(51) Int. Cl.⁴ : **F 16 D   1/12**, B 65 D   1/10

(54) **Dispositif de réglage perfectionné de la position angulaire d'un organe sur un arbre, notamment d'un volant sur un arbre de direction.**

(30) Priorité : **10.02.86 FR 8601776**

(43) Date de publication de la demande :
**26.08.87 Bulletin 87/35**

(45) Mention de la délivrance du brevet :
**07.06.89 Bulletin 89/23**

(84) Etats contractants désignés :
**DE ES GB IT**

(56) Documents cités :
**FR-A-   507 602**
**FR-A-   577 157**
**FR-A- 2 557 992**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Henriot, Michel**
**F-25150 Ecurcey (FR)**

(74) Mandataire : **Polus, Camille et al**
**c/o Cabinet Lavoix 2, Place d'Estienne d'Orves**
**F-75441 Paris Cedex 09 (FR)**

Jouve, 18, rue St-Denis, 75001 Paris, France

## Description

La présente invention concerne un dispositif de réglage de la position angulaire d'un organe sur un arbre, notamment d'un volant de direction sur un arbre de direction d'un véhicule automobile où cet organe est du type de celui énoncé dans le préambule de la revendication principale. Un tel dispositif est connu par le document FR-A 577 157.

On connaît dans l'état de la technique un certain nombre de dispositifs permettant de régler la position angulaire notamment d'un volant de direction de véhicule automobile sur un arbre de direction.

Ces volants de direction comportent un cercle et un moyeu, réunis de manière classique par un certain nombre de branches radiales.

On sait que le calage en rotation du volant, avec une extrémité libre de l'arbre de direction, est effectué au moyen de cannelures ménagées dans l'arbre de direction, et dans lesquelles s'emboîtent des cannelures correspondantes ménagées dans le moyeu. Ce moyeu comporte par ailleurs une surface tronconique destinée à coopérer avec une surface complémentaire de l'arbre de direction afin d'assurer une bonne transmission des efforts entre ces deux pièces. La fixation axiale du volant et de l'arbre de direction est obtenue par un écrou, par exemple indesserrable, vissé sur l'extrémité de l'arbre de direction et prenant appui sur une rondelle interposée entre cet écrou et le moyeu.

La pose du volant sur l'arbre de direction est effectuée après les différents réglages du train avant du véhicule. Or, ce train avant est réglé après mise en place de la barre de direction et de l'arbre de direction qui lui est associé, ce qui se traduit par une répercussion des réglages sur l'arbre de direction qui tourne plus ou moins autour de son axe. On conçoit dès lors que les cannelures que comporte l'arbre de direction ne sont pas, dans la majorité des cas, placées angulairement pour permettre la pose du volant de manière telle que les branches de celui-ci aient une position rigoureuse liée à la conduite et à la visibilité des appareils disposés sur le tableau de bord du véhicule, au travers de ce volant.

Afin de remédier à ces inconvénients, on a proposé de multiplier le nombre de cannelures. Le volant est en général calé angulairement sur la colonne de direction par quarante cannelures, l'incertitude de position du volant étant donc de 9°. Par ailleurs, des opérations de réglage de la direction après mise en place du volant peuvent décaler celui-ci par rapport au réglage initial.

On connaît également d'après le document FR. 2 557 992, un dispositif pour régler la position angulaire d'un organe calé en rotation avec un arbre, notamment d'un volant de véhicule automobile associé à une colonne de direction. Ce dispositif comprend une bague ayant sur sa surface interne des moyens d'accouplement avec un arbre, constitués par exemple par un arbre de direction, et sur sa surface externe des moyens d'accouplement avec un organe tel que le moyeu d'un volant. Cette bague est susceptible d'être déplacée en translation à l'aide d'un élément de commande, l'un au moins des moyens d'accouplement étant adapté pour déterminer, outre une translation de la bague, un déplacement angulaire du moyeu et donc du volant par rapport à l'arbre de direction.

Par ailleurs, on connaît d'après le document FR. 997 670, un dispositif pour caler les volants de direction à deux branches. Ce dispositif, permettant de compenser par un calage correct les différences d'orientation que peut présenter le montage d'un volant à deux branches sur un arbre de direction de véhicule automobile, est caractérisé en ce qu'on interpose entre le moyeu du volant et l'arbre de direction, une bague intermédiaire dont la conformation extérieure, semblable à celle intérieure du moyeu, permet le blocage du volant sur l'arbre de direction dans la position désirée.

Suivant un mode de réalisation particulier, le moyeu du volant comporte un cône intérieur que prolonge un alésage cylindrique supérieur pourvu de rainures ou de stries longitudinales et s'engage sur une bague intermédiaire appropriée à cône inférieur et tête cylindrique rainurée bloquée sur l'arbre de direction, le blocage de l'écrou de l'arbre de direction assurant définitivement la position du volant par pénétration, les unes dans les autres, des rainures ou stries du moyeu et de la bague intermédiaire.

Enfin, les documents AT. 295 246, GB. 509 508, DE. 900 505, US. 1 922 596 et US. 1 903 162, décrivent un certain nombre de dispositifs d'accouplement particuliers.

Cependant, tous ces dispositifs présentent un certain nombre d'inconvénients, notamment en raison de leur structure relativement complexe augmentant d'autant les prix de revient de tels dispositifs.

Le but de l'invention est de résoudre les problèmes évoqués ci-dessus en proposant un dispositif qui soit simple, fiable, permettant d'effectuer rapidement et facilement le réglage désiré et qui soit d'un prix de revient relativement faible.

A cet effet, l'invention a pour objet un dispositif de réglage de la position angulaire d'un organe sur un arbre, notamment d'un volant sur un arbre de direction, où ledit organe est solidaire d'une première couronne formant moyeu de l'organe, montée déplaçable angulairement par rapport à une seconde couronne formant douille, crantée sur sa surface intérieure, coaxiale à la première et solidaire en rotation de l'arbre, caractérisé en ce que ladite seconde couronne est disposée dans un évidement annulaire de la première, en ce que lesdites première et seconde couronnes comportent chacune au moins deux paires d'échancrures délimitées par des parois radiales, diamétralement opposées deux à deux et de même angle d'ouverture α, en ce que la différence entre l'angle formé par les axes des échancrures correspondantes des paires de la première couronne et l'angle formé par les axes des échancrures correspondantes des paires de la seconde couronne, est différente de 0 et inférieure à α, et en ce qu'il est prévu des moyens de blocage destinés à coopérer avec lesdites échancrures pour bloquer en rotation lesdites couronnes l'une par rapport à l'autre.

Avantageusement, les axes des échancrures correspondantes des paires de la première couronne sont décalés angulairement l'un par rapport à l'autre, d'un angle égal à $\gamma \pm \beta$ avec $\alpha < \gamma < 180° - \alpha$ et $0 \leqslant \beta \leqslant \pm \alpha/2$, et les axes des échancrures correspondantes des paires de la seconde couronne sont décalés angulairement l'un par rapport à l'autre d'un angle égal à $\gamma - \alpha/2$.

Avantageusement également, les moyens de blocage comportent au moins deux paires de coins diamétralement opposés deux à deux et les axes passant par les arêtes des coins correspondants de chaque paire sont décalés angulairement l'un par rapport à l'autre d'un angle égal à $\gamma - \alpha/4 + \beta/2$.

L'invention sera mieux comprise à l'aide de la description qui va suivre, donnée uniquement à titre d'exemple et faite en se référant aux dessins annexés, sur lesquels :

la Fig. 1 représente une vue en coupe d'un dispositif selon l'invention ;

la Fig. 2 représente une vue de dessus des deux couronnes entrant dans la constitution d'un dispositif selon l'invention ;

la Fig. 3 représente une vue de dessous des moyens de blocage entrant dans la constitution d'un dispositif selon l'invention ;

les Fig. 4a et 4b représentent différentes vues en perspective des couronnes entrant dans la constitution d'un dispositif selon l'invention ;

les Fig. 5a et 5b représentent différentes vues montrant les moyens de blocage entrant dans la constitution d'un dispositif selon l'invention ;

la Fig. 6 représente une vue de dessus des couronnes entrant dans la constitution d'un dispositif selon l'invention, dans une position extrême ;

la Fig. 7 représente une vue en coupe d'un dispositif de réglage selon l'invention, suivant la ligne A-A de la Fig. 6 ;

la Fig. 8 représente une vue en coupe d'un dispositif selon l'invention, suivant la ligne B-B de la Fig. 6 ;

la Fig. 9 représente une vue de dessus des couronnes entrant dans la constitution d'un dispositif selon l'invention, dans l'autre position extrême ;

la Fig. 10 représente une vue en coupe du dispositif de réglage selon l'invention, suivant la ligne C-C de la Fig. 9 ;

la Fig. 11 représente une vue en coupe du dispositif de réglage selon l'invention, suivant la ligne D-D de la Fig. 9 ; et

les Fig. 12 et 13 représentent des vues schématiques en développement illustrant le fonctionnement du dispositif de réglage selon l'invention.

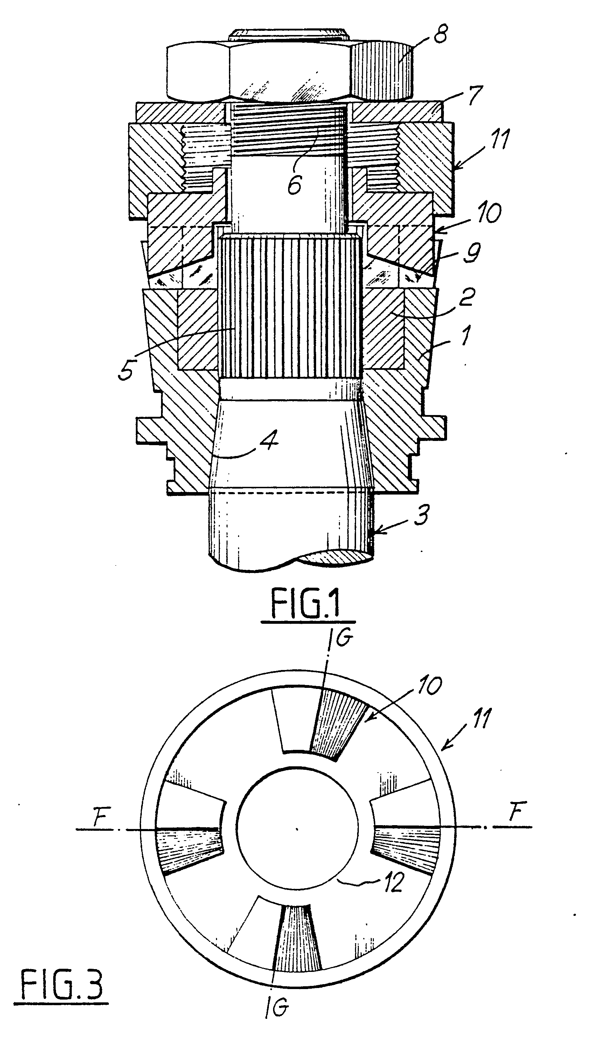

Sur la Fig. 1, on a représenté une vue en coupe d'un dispositif de réglage de la position angulaire d'un volant sur un arbre de direction. Le volant (non représenté) est solidaire d'une première couronne 1 formant moyeu de ce volant. Cette couronne et donc le volant qui en est solidaire, sont montés déplaçables angulairement par rapport à une seconde couronne 2 formant douille, crantée sur sa surface intérieure, coaxiale à la première couronne 1 et solidaire en rotation d'un arbre 3 de direction. Cet arbre 3 présente, de manière connue en soi, une portion tronconique 4 destinée à coopérer avec une portion complémentaire de la première couronne 1, une portion cannelée 5 destinée à coopérer avec des cannelures complémentaires de la surface intérieure de la seconde couronne 2, et à son extrémité libre une portion filetée 6 destinée à recevoir une rondelle 7 et un écrou 8 de fixation du volant sur l'arbre.

Les première et seconde couronnes comportent des échancrures 9 qui seront décrites plus en détail par la suite, et dans lesquelles viennent s'engager des extrémités de coins 10 de moyens de blocage 11 de la rotation desdites couronnes l'une par rapport à l'autre.

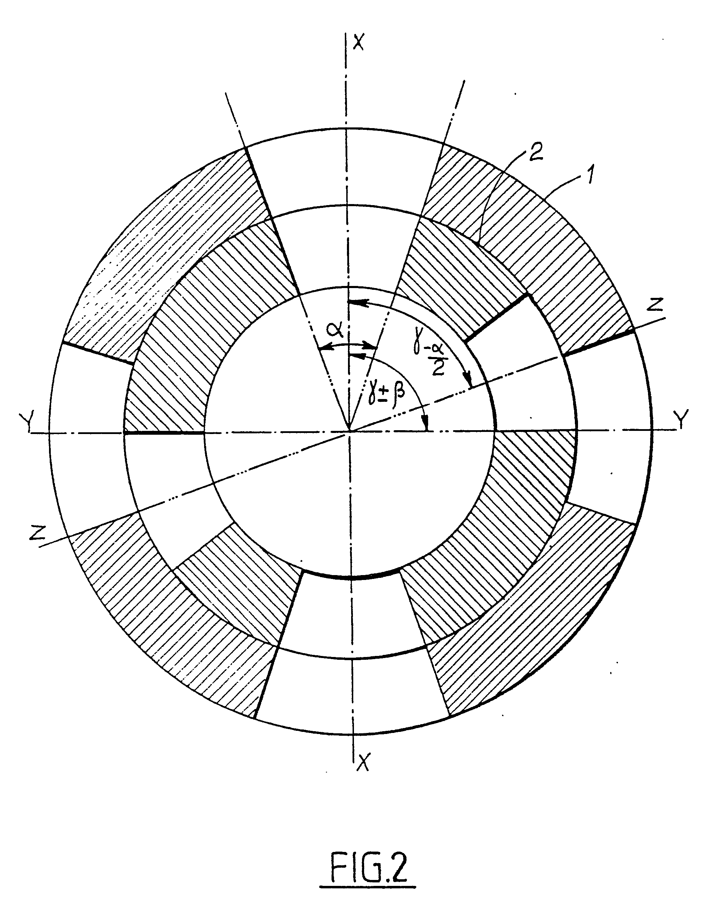

Comme on peut le voir plus particulièrement sur la Fig. 2 les première et seconde couronnes comportent chacune au moins deux paires d'échancrures délimitées par des parois radiales, diamétralement opposées deux à deux, et d'angle d'ouverture égal à α. Les axes des échancrures correspondantes des paires de la première couronne 1, c'est-à-dire les axes X-X et Y-Y, sont décalés angulairement l'un par rapport à l'autre, d'un angle égal à $\gamma \pm \beta$ avec $\alpha < \beta < 180° - \alpha$ et $0 \leqslant \beta \leqslant \pm \alpha/2$. Avantageusement, $\gamma$ est égal à 90° et α est inférieur ou égal à 45°.

Les axes des échancrures correspondantes des paires de la seconde couronne 2, c'est-à-dire les axes X-X et Z-Z, sont décalés angulairement l'un par rapport à l'autre d'un angle égal à $\gamma - \alpha/2$.

La différence entre l'angle formé par les axes des échancrures correspondantes des paires de la première couronne, c'est-à-dire les axes X-X et Y-Y, et l'angle formé par les axes des échancrures correspondantes des paires de la seconde couronne, c'est-à-dire les axes X-X et Z-Z est différente de 0 et inférieure à α. Ceci permet, en fonction du déplacement angulaire de la première couronne 1 par rapport à la seconde 2, d'obtenir des échancrures résultantes de largeur variable en fonction du décalage angulaire des échancrures des première et seconde couronnes, les unes par rapport aux autres et donc de la position relative des couronnes l'une par rapport à l'autre.

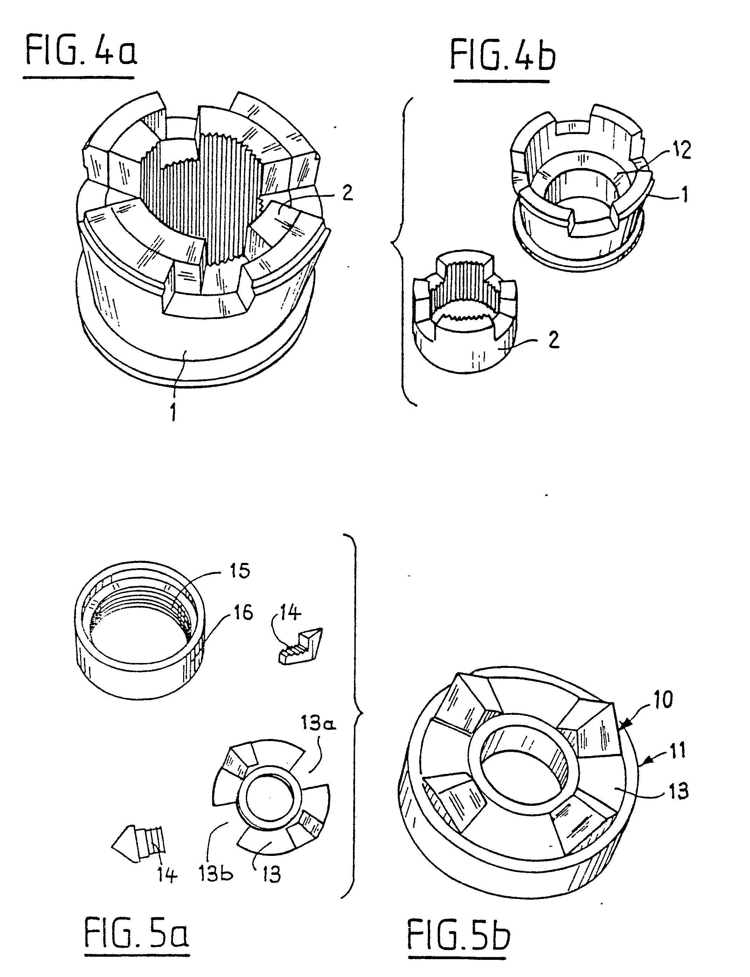

Le blocage, dans une position désirée, de la première couronne par rapport à la seconde est réalisé par l'intermédiaire des moyens de blocage 11 représentés sur la Fig. 3. Ces moyens de blocage se présentent sous la forme d'une pièce circulaire comportant un évidement central 12 permettant d'emmancher ces moyens sur l'extrémité correspondante de l'arbre de direction. Ces moyens de blocage comportent au moins deux paires de coins 10 diamétralement opposés deux à deux et destinés à coopérer avec les échancrures résultantes mentionnées précédemment, pour bloquer les couronnes l'une par rapport à l'autre dans une position de réglage désiré.

Les axes G-G et F-F passant par les arêtes des coins correspondants de chaque paire de ces moyens de blocage sont décalés angulairement l'un par rapport à l'autre d'un angle égal à $\gamma - \alpha/4 \mp B/2$.

Comme on peut le voir sur les Fig. 4a et 4b, les première et seconde couronnes se présentent sous la forme de pièces cylindriques, la surface extérieure de la première couronne 1 comportant des moyens connus de fixation d'un volant sur celle-ci, et la surface intérieure de la seconde couronne 2 étant crantée pour coopérer avec les cannelures correspondantes de l'arbre afin de bloquer en rotation cette seconde couronne par rapport à l'arbre. La seconde couronne 2 est disposée dans un évidement annulaire 12 de la première couronne.

Ainsi qu'il est représenté sur les Fig. 5a et 5b, les coins 10 des moyens de blocage 11 sont constitués par des pièces dont l'extrémité destinée à coopérer avec les échancrures correspondantes des couronnes, présentent une section triangulaire variable et une arête inclinée vers le centre d'une pièce de support annulaire 13. L'une des paires de coins est solidaire de cette pièce de support 13 et ces coins seront appelés ci-après les coins fixes. Les coins de l'autre paire sont montés déplaçables axialement par rapport à cette pièce de support 13 et donc aux coins fixes, pour adapter la position de ces coins à la largeur des échancrures résultantes obtenues par le décalage angulaire des échancrures des première et seconde couronnes. Ces coins, montés déplaçables, seront appelés ci-après les coins mobiles. Les coins mobiles sont montés déplaçables dans des encoches 13a, 13b de la pièce de support 13 et présentent sur une surface opposée au centre de la pièce, une portion filetée 14 destinée à coopérer avec une portion taraudée 15, de la surface intérieure d'une bague 16 qui est montée déplaçable en rotation autour de la pièce de support 13 des moyens de blocage. Ainsi, une rotation de cette bague 16 entraîne un déplacement axial des coins mobiles par rapport à la pièce de support et donc aux coins fixes pour, comme il a été mentionné précédemment, adapter la position de ces coins à la largeur des échancrures résultantes.

Bien que sur les Fig. 4a et 4b, on ait représenté des échancrures présentant une section rectangulaire variable de l'extérieur vers le centre de la couronne correspondante, il va de soi que ces échancrures peuvent présenter une forme complémentaire à celle de l'extrémité correspondante des coins, c'est-à-dire une section triangulaire variable et une arête inclinée vers la pièce de support qui est disposée au-dessus desdites couronnes.

L'angle de réglage possible est délimité par les échancrures résultantes à $\pm (\alpha/2 - \beta)$, déterminant ainsi deux positions extrêmes dans lesquelles l'une ou l'autre des paires d'échancrures de la première couronne est en regard des échancrures correspondantes de la seconde.

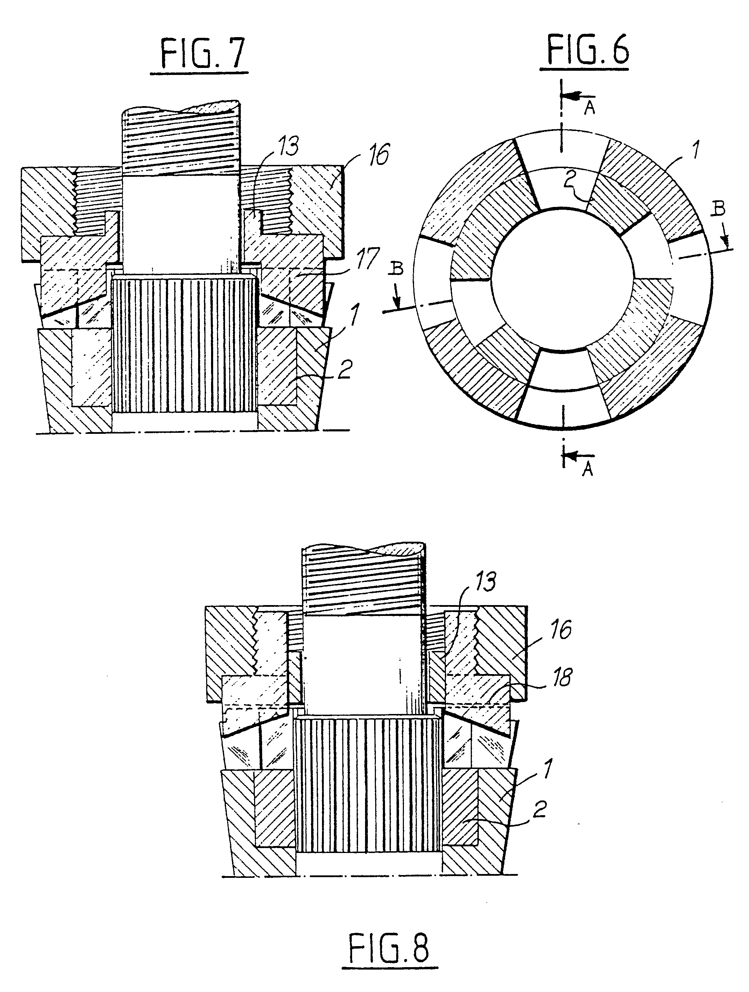

Ainsi qu'on peut le voir sur les Fig. 6, 7 et 8 qui représentent différentes vues en coupe d'un dispositif de réglage selon l'invention dans une position extrême, les coins fixes 17 solidaires de la pièce de support 13 sont totalement engagés dans les échancrures d'une paire des première et seconde couronnes, ces échancrures étant en regard les unes des autres.

Par contre, les autres paires d'échancrures des première et seconde couronnes, n'étant pas complètement en regard l'une de l'autre, les coins mobiles 18 ont donc été déplacés par l'intermédiaire de la bague 16, vers une position plus ou moins escamotée à l'intérieur de la pièce de support afin de s'adapter à la largeur des échancrures résultantes, définissant, en fonction de la forme de l'extrémité correspondante des coins, la profondeur sur laquelle peuvent s'engager les coins mobiles.

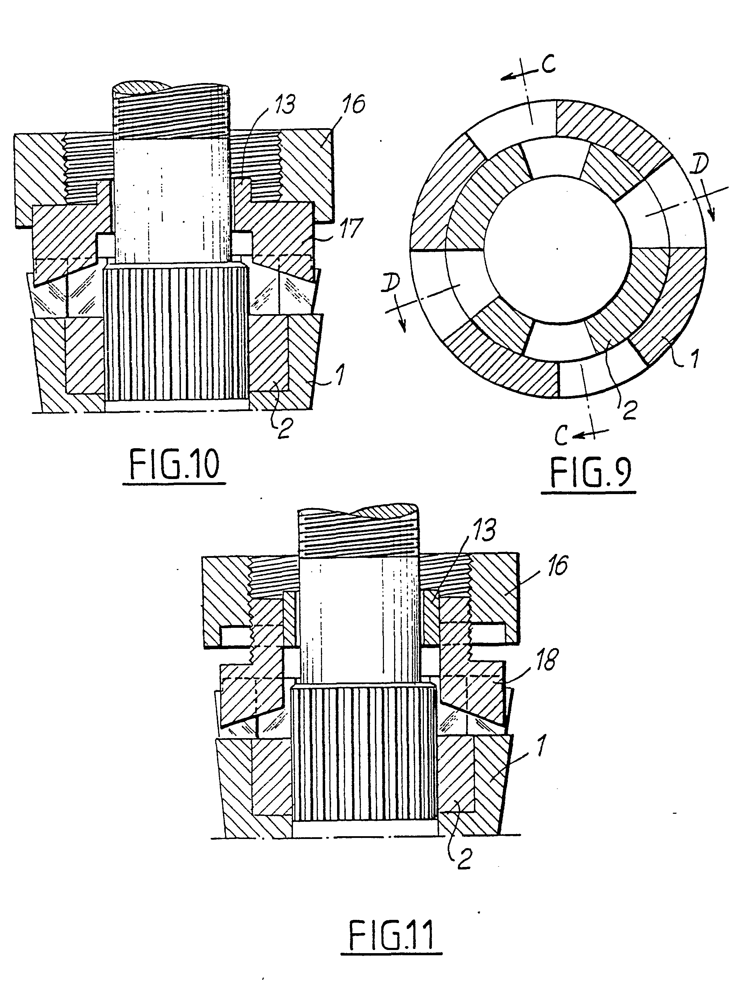

Ainsi qu'il est représenté sur les Fig. 9, 10 et 11, et contrairement aux Fig. 6, 7 et 8, dans lesquelles les coins fixes étaient totalement engagés dans des échancrures en regard l'une de l'autre des première et seconde couronnes, les coins fixes 17 coopèrent avec des échancrures résultantes de largeur réduite obtenues par le décalage des échancrures des première et seconde couronnes, de sorte que ces coins fixes ne peuvent plus s'engager sur toute la profondeur des échancrures. Ces coins fixes, la pièce de support 13 et la bague 16 montée à rotation autour de celle-ci, se trouvent donc écartés de manière correspondante des première et seconde couronnes. Pour assurer le blocage en rotation des couronnes l'une par rapport à l'autre, il est donc nécessaire d'engager complètement les coins mobiles dans les échancrures correspondantes. Ceci est obtenu par rotation de la bague 16 autour de la pièce de support 13, de manière que le taraudage de sa surface intérieure coopère avec le filetage de la portion correspondante 14 des coins mobiles et amène ceux-ci à s'engager dans les échancrures correspondantes.

Ainsi, lorsque l'on désire régler la position angulaire du volant par rapport à l'arbre de direction, on dévisse l'écrou 8 de l'extrémité correspondante de l'arbre, pour libérer les moyens de blocage 11 de leur position de blocage dans laquelle les coins sont engagés dans les échancrures, de manière à bloquer en rotation les première et seconde couronnes. Une fois l'écrou dévissé, on dégage les moyens de blocage 11 et plus particulièrement les coins 10 des échancrures 9 des première et seconde couronnes, de manière à permettre un déplacement angulaire de la première couronne et donc du volant par rapport à la seconde et donc à l'arbre jusqu'à la position de réglage désiré. Une fois cette position atteinte, la largeur des échancrures résultantes, définie par la largeur des parties en regard des échancrures correspondantes des première et seconde couronnes, ne correspond en général plus à la position axiale des coins mobiles par rapport aux coins fixes. En effet, si la largeur des échancrures résultantes varie, la paire de coins fixes ou la paire de coins mobiles, viendra coopérer avec les échancrures correspondantes, mais les deux paires de coins fixes et mobiles ne seront pas engagées ensemble dans les échancrures correspondantes.

L'opérateur règle alors la position des coins mobiles par rapport aux coins fixes, de manière que les deux paires de coins viennent s'ajuster ensemble dans les échancrures résultantes correspondantes. Cette opération est, comme on l'a déjà décrit précédemment, réalisée par l'intermédiaire de la bague taraudée intérieurement 16 coopérant avec les portions filetées des coins mobiles pour assurer leur déplacement. Une fois le réglage des coins mobiles terminé et que les coins fixes et les coins mobiles s'engagent dans les échancrures résultantes, l'opérateur replace l'écrou 8 de manière à serrer les moyens de blocage 11 contre les première et seconde couronnes, la portion tronconique 4 de la première couronne 1 venant coopérer avec la portion correspondante de l'arbre 3.

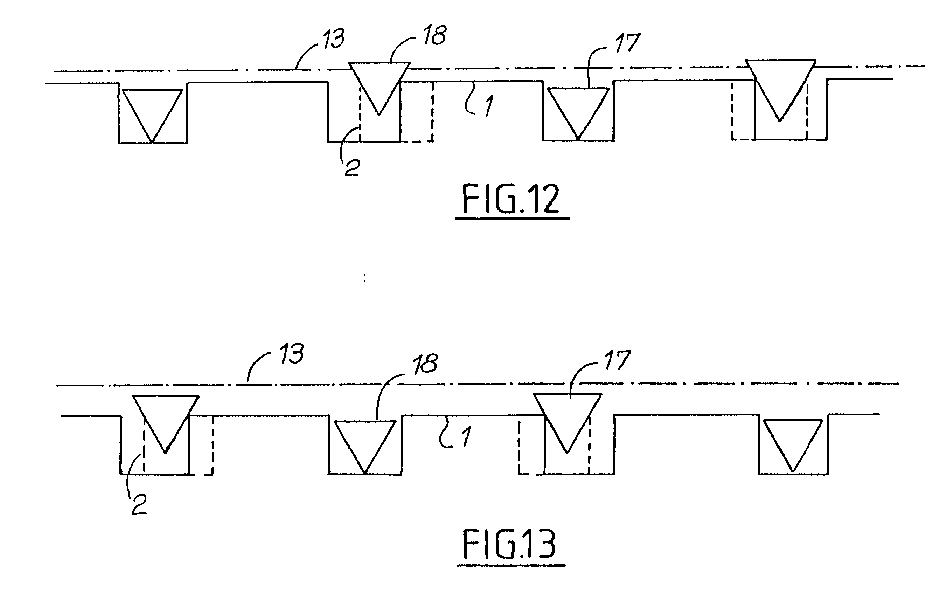

Ce fonctionnement est illustré de manière schématique sur les Fig. 12 et 13 dans lesquelles les traits mixtes représentent la pièce de support 13, les traits pleins représentent la première couronne 1 et les traits pointillés représentent la seconde couronne 2.

On voit sur ces Figures que la position relative des coins fixes 17 par rapport à la pièce de support 13 ne change pas quelle que soit la position de réglage désiré de la première couronne par rapport à la seconde. Les coins mobiles 18 sont montés déplaçables par rapport à cette pièce de support 13 entre une position haute dans laquelle la largeur des échancrures résultantes est définie par la largeur des parties en regard des échancrures des première et seconde couronnes, et une position basse dans laquelle les échancrures correspondantes des première et seconde couronnes sont en regard l'une de l'autre, mais dans laquelle les coins fixes et donc la pièce de support 13, sont écartés des première et seconde couronnes, car, comme il est représenté sur la Fig. 13, la largeur des échancrures résultantes dans lesquelles s'engagent les coins fixes, a diminué en raison d'un décalage des échancrures correspondantes des première et seconde couronnes.

Les coins mobiles constituent donc des moyens de rattrapage du déplacement de la pièce de support 13 et des coins fixes par rapport aux couronnes en fonction du décalage angulaire des première et seconde couronnes.

Le dispositif qui vient d'être décrit permet donc de recaler angulairement par exemple un volant de direction dans une position correcte.

Ce recalage est possible sur un angle de $\pm (\alpha/2 - \beta)$. Ainsi, dans le cas d'un arbre comprenant 40 cannelures, son imprécision est comme il a déjà été mentionné, de 9°. Si l'on désire rattraper un angle d'imprécision de deux cannelures, il faut que : $\alpha/2 - \beta = 18°$.

Si on fixe $\beta = 1°$, on obtient : $\alpha/2 = 19°$ d'où : $\alpha = 38°$.

Pour des questions de solidité et d'équilibre, cet angle $\alpha$ peut être, comme mentionné précédemment, limité par exemple à 45°.

**Revendications**

1. Dispositif de réglage de la position angulaire d'un organe sur un arbre notamment d'un volant sur un arbre de direction, ledit organe étant solidaire d'une première couronne (1) formant moyeu de l'organe, montée déplaçable angulairement par rapport à une seconde couronne (2) formant douille, crantée sur sa surface intérieure, coaxiale à la première et solidaire en rotation de l'arbre (3), caractérisé en ce que ladite seconde couronne (2) est disposée dans un évidement annulaire (12) de la première, en ce que lesdites première et seconde couronnes (1, 2) comportent chacune au moins deux paires d'échancrures délimitées par des parois radiales diamétralement opposées deux à deux et de même angle d'ouverture $\alpha$, en ce que la différence entre l'angle formé par les axes des échancrures correspondantes des paires de la seconde couronne (2), est différente de 0 et inférieure à $\alpha$, et en ce qu'il est prévu des moyens de blocage (11) destinés à coopérer avec lesdites échancrures pour bloquer en rotation lesdites couronnes l'une par rapport à l'autre.

2. Dispositif selon la revendication 1, caractérisé en ce que les axes (X-X, Y-Y) des échancrures correspondantes des paires de la première couronne (1) et l'angle formé par les axes des échancrures correspondantes des paires de la première couronne (1) sont décalés angulairement l'un par rapport à l'autre, d'un angle égal à $\gamma \pm \beta$ avec $\alpha \leqslant \gamma < 180° - \alpha$ et $0 \leqslant \beta \leqslant \pm \alpha/2$, et en ce que les axes (X-X, Z-Z) des échancrures correspondantes des paires de la seconde couronne (2) sont décalés angulairement l'un par rapport à l'autre d'un angle égal à $\gamma - \alpha/2$.

3. Dispositif selon la revendication 1 ou 2, caractérisé en ce que les moyens de blocage (11) comportent au moins deux paires de coins (10) diamétralement opposés deux à deux et en ce que les axes (G-G, F-F) passant par les arêtes des coins correspondants de chaque paire sont décalés angulairement l'un par rapport à l'autre d'un angle égal à $\gamma - \alpha/4 \mp \beta/2$.

4. Dispositif selon la revendication 3, caractérisé en ce que les coins (18) d'au moins l'une des paires sont montés déplaçables par rapport à ceux (17) de l'autre paire pour adapter la position de ceux-ci à la largeur des échancrures résultantes obtenues par le décalage angulaire de celles des première et seconde couronnes (1, 2).

5. Dispositif selon la revendication 4, caractérisé en ce que lesdits coins mobiles (18) sont disposés dans des encoches (13a, 13b) d'une pièce de support annulaire (13), emmanchée sur l'arbre, autour de laquelle est montée déplaçable en rotation une bague (16) présentant sur sa surface intérieure un taraudage (15) coopérant avec une portion filetée (14) des coins mobiles pour permettre leur déplacement par rapport aux coins fixes (17) solidaires de ladite pièce de support (13).

6. Dispositif selon l'une quelconque des revendications 3 à 5, caractérisé en ce que les coins sont constitués par des pièces dont l'extrémité destinée à coopérer avec les échancrures correspondantes, présente une section triangulaire variable et une arête inclinée vers le centre de la pièce de support (13).

7. Dispositif selon la revendication 6, caractérisé en ce que les échancrures présentent une forme complémentaire à celle de l'extrémité correspondante des coins.

8. Dispositif selon la revendication 6, caractérisé en ce que les échancrures présentent une section rectangulaire variable de l'extérieur vers le centre de la couronne correspondante (1, 2).

9. Dispositif selon l'une quelconque des revendications précédentes, caractérisé en ce que $\gamma = 90°$.

10. Dispositif selon l'une quelconque des revendications précédentes, caractérisé en ce que $\alpha$ est inférieur ou égal à 45°.

## Claims

1. Device for adjusting the angular position of a member on an axle, particularly of a steering wheel on a steering axle, where the said member is integral with a first ring (1) forming the boss of the member mounted in an angularly displaceable manner with respect to the second ring (2) forming a bush, whose inner surface is notched, which is coaxial to the first ring and integral in rotation with the axle (3), characterized in that said second ring (2) is located in an annular slot (12) of the first, in that said first and second rings (1, 2) have in each case at least two pairs of notches defined by radial walls, which are diametrically opposite in pairs and have the same opening angle $\alpha$, in that the difference between the angle formed by the axes of the corresponding notches of the pairs of the first ring (1) and the angle formed by the axes of the corresponding notches of the pairs of the second ring (2) differs from 0 and is below $\alpha$ and in that locking means (11) are provided for cooperating with said notches in order to lock the said rings with respect to one another in rotation.

2. Device according to claim 1, characterized in that the axes X-X, Y-Y of the corresponding notches of the pairs of the first ring (1) are angularly reciprocally displaced by an angle equal to $\gamma \pm \beta$ with $\alpha < \gamma < 180° - X$ and $0 \leqslant \beta \leqslant \pm \alpha/2$, and in that the axes (X-X, Z-Z) of the corresponding notches of the pairs of the second ring (2) are reciprocally angularly displaced by an angle equal to $\gamma - \alpha/2$.

3. Device according to claims 1 or 2, characterized in that the locking means (11) have at least two pairs of wedges (10), which are diametrically opposite in pairs and in that the axes (G-G, F-F) passing through the edges of the corresponding wedges of each pair are reciprocally angularly displaced by an angle equal to $\gamma - \alpha/4 \pm \beta/2$.

4. Device according to claim 3, characterized in that the wedges (18) of at least one of the pairs are mounted so as to be displaceable with respect to those (17) of the other pair, in order to adapt the position thereof to the width of the resultant notches obtained by the angular displacement of those of the first and second rings (1, 2).

5. Device according to claim 4, characterized in that the mobile wedges (18) are located in notches (13a, 13b) of an annular support part (13), fitted onto the axle and about, which is mounted a collar (16) which is displaceable in rotation and having on its inner surface a tapped portion (15) cooperating with a threaded portion (14) of the mobile wedges in order to permit their displacement with respect to the fixed wedges (17) integral with said support part (13).

6. Device according to any one of the claims 3 to 5, characterized in that the wedges are constituted by parts, whose end which has to cooperate with the corresponding notches has a variable triangular section and an edge inclined towards the centre of the support part (13).

7. Device according to claim 6, characterized in that the notches have a shape complementary to that of the corresponding end of the wedges.

8. Device according to claim 6, characterized in that the notches have a rectangular section which varies from the outside to the centre of the corresponding ring (1, 2).

9. Device according to any one of the preceding claims, characterized in that $\gamma = 90°$.

10. Device according to any one of the preceding claims, characterized in that $\alpha$ is equal to or less than 45°.

## Patentansprüche

1. Vorrichtung zur Einstellung der Winkellage eines Teils auf einer Welle, insbesondere eines Lenkrads auf einer Lenkwelle, wobei das Teil mit einem die Nabe des Teils bildenden ersten Kranz (1) fest verbunden ist, welcher winkelmäßig versetzbar bezüglich eines eine Büchse bildenden zweiten Kranzes (2) ist, welcher auf seiner Innenfläche gerippt, koaxial mit dem ersten und drehfest mit der Welle (3) verbunden ist, dadurch gekennzeichnet, daß der zweite Kranz (2) in einer ringförmigen Ausnehmung (12) des ersten angeordnet ist, daß der erste und zweite Kranz (1, 2) jeweils wenigstens zwei Paare von bogenförmigen Ausschnitten aufweisen, die durch radiale Wände begrenzt sind, paarweise diametral gegenüberliegen und den gleichen Öffnungswinkel $\alpha$ haben, daß die Differenz zwischen dem Winkel, der durch die Achsen der entsprechenden bogenförmigen Ausschnitte der Paare des ersten Kranzes (1) gebildet wird, und dem Winkel, der durch die Achsen der entsprechenden bogenförmigen Ausschnitte der Paare des zweiten Kranzes (2) gebildet wird, von 0 verschieden und kleiner als $\alpha$ ist, und daß Blockiermittel (11) vorgesehen sind, welche für ein Zusammenwirken mit den bogenförmigen Ausschnitten zur Blockierung einer Relativdrehung der beiden Kränze bestimmt sind.

2. Vorrichtung nach Anspruch 1, dadurch gekennzeichnet, daß die Achsen (X-X, Y-Y) der entsprechenden bogenförmigen Ausschnitte der Paare des ersten Kranzes (1) gegeneinander um einen Winkel $\gamma \pm \beta$ mit $\alpha \leq \gamma < 180° - \alpha$ und $0 \leq \beta \leq \pm \alpha/2$ winkelversetzt sind, und daß die Achsen (X-X, Z-Z) der entsprechenden bogenförmigen Ausschnitte der Paare des zweiten Kranzes (2) gegeneinander um einen Winkel $\gamma - \alpha/2$ winkelversetzt sind.

3. Vorrichtung nach Anspruch 1 oder 2, dadurch gekennzeichnet, daß die Blockiermittel (11) wenigstens zwei Paare von paarweise diametral gegenüberliegenden Keilen (10) aufweisen, und daß die durch die Anschläge der entsprechenden Keile eines jeden Paares verlaufenden Achsen (G-G, F-F) winkelmäßig zueinander um einen Winkel $\gamma - \alpha/4 \mp \beta/2$ versetzt sind.

4. Vorrichtung nach Anspruch 3, dadurch gekennzeichnet, daß die Keile (18) wenigstens eines der Paare versetzbar gegenüber denjenigen (17) des anderen Paares angebracht sind, um die Lage derselben der Breite der resultierenden bogenförmigen Ausschnitte, die durch die Winkelversetzung derjenigen des ersten und zweiten Kranzes (1, 2) erhalten werden, anzupassen.

5. Vorrichtung nach Anspruch 4, dadurch gekennzeichnet, daß die beweglichen Keile (18) in Aussparungen (13a, 13b) eines auf der Welle aufgezogenen ringförmigen Trägerteils (13) angeordnet sind, um welches herum drehversetzbar ein Ring (16) angebracht ist, welcher auf seiner Innenseite ein Gewinde (15) aufweist, das mit einem Gewindeabschnitt (14) der beweglichen Keile zusammenwirkt, so daß diese bezüglich der mit dem Trägerteil (13) fest verbundenen feststehenden Keile (17) versetzbar sind.

6. Vorrichtung nach irgendeinem der Ansprüche 3 bis 5, dadurch gekennzeichnet, daß die Keile durch Teile gebildet sind, deren für ein Zusammenwirken mit den entsprechenden bogenförmigen Ausschnitten bestimmtes Ende einen wechselnden dreieckigen Querschnitt und einen zur Mitte des Trägerteils (13) geneigten Anschlag aufweist.

7. Vorrichtung nach Anspruch 6, dadurch gekennzeichnet, daß die bogenförmigen Ausschnitte eine Form aufweisen, die komplementär zu derjenigen des entsprechenden Endes der Keile ist.

8. Vorrichtung nach Anspruch 6, dadurch gekennzeichnet, daß die bogenförmigen Ausschnitte einen vom Äußeren zur Mitte des entsprechenden Kranzes (1, 2) wechselnden rechteckigen Querschnitt aufweisen.

9. Vorrichtung nach irgendeinem der vorstehenden Ansprüche, dadurch gekennzeichnet, daß $\gamma = 90°$ ist.

10. Vorrichtung nach irgendeinem der vorstehenden Ansprüche, dadurch gekennzeichnet, daß $\alpha$ kleiner oder gleich 45° ist.

EP 0 233 813 B1

FIG.1

FIG.3

FIG.2

# FIG.4a

# FIG.4b

# FIG.5a

# FIG.5b

FIG.7

FIG.6

FIG.8

FIG.10

FIG.9

FIG.11

FIG.12

FIG.13